# EUROPÄISCHE PATENTSCHRIFT

(11) **EP 3 663 727 B1**
(45) Veröffentlichungstag und Bekanntmachung des Hinweises auf die Patenterteilung: **03.04.2024**
(21) Anmeldenummer: 19194877.7
(22) Anmeldetag: 02.09.2019
(51) Int. Cl.: G01F 1/661, G01F 1/7086, G01F 1/66

(54) **STRÖMUNGSMESSVERFAHREN UND STRÖMUNGSMESSVORRICHTUNG ZUR OPTISCHEN STRÖMUNGSMESSUNG**
FLOW MEASURING METHOD AND FLOW MEASURING DEVICE FOR OPTICAL FLOW MEASUREMENT
PROCÉDÉ DE MESURE DE DÉBIT ET DISPOSITIF DE MESURE DE DÉBIT DESTINÉ À LA MESURE OPTIQUE DE DÉBIT

(30) Priorität: 05.12.2018 DE 102018131059
(43) Veröffentlichungstag der Anmeldung: 10.06.2020
(73) Patentinhaber: SIKA Dr.Siebert & Kühn GmbH & Co. KG., 34260 Kaufungen (DE)
(72) Erfinder: WILKE, Bastian, 34128 Kassel (DE); KLEINWÄCHTER, Andre, 18198 Stäbelow (DE); SCHÄPER, Martin, 18057 Rostock (DE); DAMASCHKE, Nils, 18059 Papendorf (DE)
(74) Vertreter: Walther Bayer Faber Patentanwälte PartGmbB

(56) Entgegenhaltungen:
- EP-A1- 3 388 866
- DE-A1-102005 042 954
- DE-A1-102010 030 835
- US-A1- 2007 107 512
- US-B1- 7 738 084
- TIMO STEINMETZ ET AL: "Accuracy of Time-Resolved Velocity Estimation by Adaptive Spatial Filter Velocimetry in Comparison to PIV Cross Correlation", 19TH INTERNATIONAL SYMPOSIUM ON THE APPLICATION OF LASER AND IMAGING TECHNIQUES TO FLUID MECHANICS.LISBON PORTUGAL, 19. Juli 2018 (2018-07-19), Seiten 1720-1731, XP055675750,
- MOTOFUMI KOBATAKE ET AL: "A real-time micro-PIV system using frame-straddling high-speed vision", ROBOTICS AND AUTOMATION (ICRA), 2012 IEEE INTERNATIONAL CONFERENCE ON, IEEE, 14 May 2012 (2012-05-14), pages 397-402, XP032450552, DOI: 10.1109/ICRA.2012.6224821 ISBN: 978-1-4673-1403-9

## Beschreibung

Die Erfindung betrifft ein Strömungsmessverfahren zur optischen Messung von sich zeitlich ändernden Strömungsparametern eines durch einen geschlossenen Querschnitt strömenden Fluids und eine Strömungsmessvorrichtung hierzu, mit wenigstens einer Lichtquelle und mit wenigstens einer Sensoreinheit, mit der im Fluid vorhandene Partikel innerhalb einer Messebene erfasst werden.

### STAND DER TECHIK

Viele Durchflussmessverfahren sind invasive Messverfahren, die die Strömung beeinflussen und damit beispielsweise eventuelle Messfehler induzieren. Daneben gibt es nicht-invasive Verfahren, die auf unterschiedlichen Wirkprinzipien beruhen.

Durch nicht-invasive Verfahren zur Strömungsmessung wird die Strömung des Fluids im Rohrabschnitt nicht gestört, wie dies durch den Einsatz von Messfühlern in der Strömung erfolgt, sodass nicht-invasive Messverfahren prinzipbedingt zu bevorzugen sind. Bei nicht-invasiven Verfahren zur Messung der Fließgeschwindigkeit eines Fluids erfolgt folglich keine mechanische Interaktion oder Kopplung mit dem Fluid, jedoch kann der Messaufwand deutlich größer sein als bei einer Strömungsmessung mittels einer mechanischen Wechselwirkung beispielsweise eines Messfühlers, der in das strömende Fluid hineinragt.

Derzeitig prozesstauglich einsetzbare nicht-invasive Durchfluss- und Volumenstrommessverfahren basieren auf unterschiedlichen Wirkprinzipien. Akustische Verfahren können ohne Modifikation des Rohres eingesetzt werden, liefern jedoch nur einen integralen Wert. Coriolis-Verfahren bestimmen den integralen Massenfluss. Magnetisch-induktive Verfahren setzen eine leitfähige Flüssigkeit voraus. Ein prozesstaugliches optisches Sensorprinzip zur Bestimmung des Durchflusses oder des Volumenstroms ist derzeit nicht realisiert und auch in der Literatur nicht bekannt. Durchfluss- und Volumenstrommessungen anhand eines Strömungsprofils in einem Rohr erfordern die kontinuierliche, zeitaufgelöste und echtzeitfähige Messung dieses Strömungsprofils. Die derzeit bekannten optischen Strömungsmesstechniken zur Bestimmung des Volumenstroms können nicht in Echtzeit kontinuierlich zeitaufgelöst mit vergleichsweise geringem Hardwareaufwand das Strömungsprofil in einem Rohrabschnitt bestimmen.

Optische Verfahren zur Strömungsmessung beispielsweise auch innerhalb eines Rohrabschnittes basieren auf der Einstrahlung von elektromagnetischen Wellen, insbesondere Licht, in das Fluid, beispielsweise wenn dieses durch den Rohrabschnitt fließt. Grundsätzlich lassen sich punktuelle Messverfahren, integrale Messverfahren und ortsauflösende Messverfahren unterscheiden.

Ein Beispiel für ein punktuelles Messverfahren ist die Laser-Doppler-Technik. Hierbei kann immer nur ein lokal sehr eingeschränkter Bereich vermessen werden, und durch den kleinen sich ergebenden Messbereich kann nur eine ungenaue Angabe über den gesamten Volumenstrom des Fluids getroffen werden. Insbesondere betrifft dies Strömungen mit ausgeprägten oder sogar dynamisch veränderlichen Strömungsprofilen. Volumenstrommessungen mit der Laser-Doppler-Technik erfolgen typischerweise für stationäre Strömungen durch ein Abrastern des Profils.

Die Laser-Doppler Technik wurde in der DE 10 2005 042 954 A1 zur ortsauflösenden Bestimmung von Strömungsprofilen erweitert. Der hierin beschriebene Profilsensor erfordert jedoch einen hohen Aufwand zur Realisierung, Justage und zur Einkopplung der überlagerten divergenten Interferenzstreifenstrukturen. Auch eine Anpassung der Interferenzstruktur an den Prozess muss optisch und/oder mechanisch erfolgen. Darüber hinaus benötigt die Laser-Doppler Technik stets kohärentes Licht und damit eine Laserstrahlquelle. Des Weiteren kann der Sensor nicht direkt durch gekrümmte Oberflächen messen, da dadurch das Interferenzmuster gestört wird.

Ein integrales Verfahren ist der optische Laufzeit- oder Korrelations-Durchflussmesser, der z.B. aus der CA 2 439 242 A1 bekannt ist. Dieses Verfahren integriert das Signal über das gesamte Strömungsprofil. Die Umrechnung in einen Volumenstrom erfordert eine aufwendige Modellannahme für das Strömungsprofil. Geschwindigkeitsbedingte oder einbaubedingte Strömungsprofiländerungen reduzieren nachteilhafterweise die Messgenauigkeit und/oder den Dynamikbereich.

Ein bekanntes optisches Messverfahren zur Bestimmung der ortsaufgelösten Strömungsgeschwindigkeit eines Fluides ist die sogenannte Particle Image Velocimetery. Diese bestimmt den lokalen zweidimensionalen Versatz von in der Strömung vorhandenen und abgebildeten Partikeln. Die Versatzschätzung basiert entweder auf der Kreuzkorrelation (Particle Image Velocimetry, kurz PIV) oder einem Tracking von Bildmerkmalen (Particle Tracking Velocimetry, kurz PTV). Aufgrund der sehr großen notwendigen Rechenleistung für die Auswertung der Bilddaten und die Bestimmung der lokalen Geschwindigkeitsvektoren ist eine kontinuierliche Echtzeitmessung der Strömungsgeschwindigkeit eines Fluids nicht ohne weiteres möglich. Die hierzu notwendige Messtechnik, insbesondere die Hardware für die Bereitstellung einer großen Rechenleistung, ist sehr kostenintensiv.

Weiterhin erfordert die Particle Image Velocimetry eine gleichmäßige Fokussierung der Abbildung. Für Volumenstrommessungen in beispielweise runden Rohren und/oder für schräge Beobachtungsrichtungen ist eine hinreichende Homogenität der Fokussierung nicht gegeben und die Abbildungsqualität ändert sich lokal. Für eine homogene Abbildungsqualität bei schrägen Beobachtungsrichtungen nutzt die Particle Image Velocimety sogenannte Scheimflug-Anordnungen. Diese sind opto-mechanisch im Aufbau eher aufwendig und aufgrund von Mikrolinsenarrays nicht für alle Bildsensoren geeignet. Weiterhin erfordert die Particle Image Velocimetry eine Bildkalibrierung. Kontinuierliche zeitaufgelöste Echtzeit-Volumenstrommessungen mittels der Particle Image Velocimetry sind weder in der wissenschaftlichen Literatur noch im kommerziellen Bereich bekannt.

Ein weiteres optisches Verfahren zur Bestimmung von Bewegungen ist die abbildende Ortsfiltertechnik. Typischerweise wird die Ortsfiltertechnik als punktuelle Technik für die 1-komponentige punktuelle Geschwindigkeitsbestimmung von Oberflächen realisiert. Das Ortsfiltersignal ergibt sich aus der Überlagerung sehr vieler einzelner Streusignale.

Einige wissenschaftliche Arbeiten beschäftigen sich mit dem Einsatz der Ortsfiltertechnik zur Bestimmung von ortsaufgelösten Strömungsgeschwindigkeiten. Beispielsweise wird die Ortsfiltertechnik in Schaeper M, Damaschke N, Kühn V, Pöggel S (2011); "Particle image velocimetry by using optical spatial filtering method PIV'11", Ninth International Symposium on Particle Image Velocimetry. Kobe, Japan, zur ortsaufgelösten Messung eines Strömungsgeschwindigkeitsfeldes eingesetzt. Vorteil der abbildenden Ortsfiltertechnik gegenüber der Particle Image Velocimetry ist der stark reduzierte Rechenaufwand zur Bestimmung des lokalen Bilderversatzes. In Steinmetz T, Schaeper M, Kostbade R, Damaschke N, (2018) "Accuracy of Time-Resolved Velocity Estimation by Adaptive Spatial Filter Velocimetry in Comparison to PIV Cross Correlation", 19th International Symposium on the Application of Laser and Imaging Techniques to Fluid Mechanics. Lisbon Portugal, wurde gezeigt, dass mit der Ortsfiltertechnik ähnliche Genauigkeiten wie mit der Particle Image Velocimetry erreichbar sind. Ansonsten ergeben sich die gleichen Nachteile wie bei der Particle Image Velocimetry.

Die Ortsfiltertechnik wird auch zur Geschwindigkeitsbestimmung in Kapillaren eingesetzt. In der DE 10 2010 030 835 A1 ist ein System zur Bestimmung der einkomponentigen Geschwindigkeit entlang von eindimensionalen Pfaden, beispielsweise entlang einer Blutkapillaren, beschrieben. Hierbei handelt es sich um ein integrales Verfahren, welches eine Geschwindigkeitsinformation der Strömungsrichtung bestimmt.

Auch wird die Ortsfiltertechnik in Bergeler S, Krambeer H (2004), "Novel optical spatial filtering methods based on two-dimensional photodetector arrays", Meas Sci Technol 15:1309 sowie in Menn (2010); "Optische Messung der Fließgeschwindigkeit von Erythrozyten zur Erfassung der Mikrozirkulation", Fakultät für Maschinenbau, University of Rostock, für die Bestimmung eines integrierten 1-komponentigen Strömungsprofils in einer Glaskapillare eingesetzt. Aufgrund der volumetrischen Beleuchtung und der damit vorhandenen Integration in Bobachtungsrichtung ist kein reines eindimensionales Strömungsprofil bestimmbar, sondern lediglich Geschwindigkeitsmittelwerte über einen Tiefenbereich. Auch ist die Auswertung der Ortsfiltersignale aufgrund der zeitlichen Integration und der Überlagerung vieler Streulichtsignale nicht mehr zeitaufgelöst möglich. Insofern handelt es sich auch hier um ein örtlich und zeitlich integrierendes Verfahren, welches ein Mittelwertprofil einer stationären Strömung liefert. Die volumetrische Beleuchtung war auch zur Erzeugung der homogenen Abbildungseigenschaften notwendig.

Aufgrund der volumetrischen Beleuchtung und der damit eingeschlossenen Tiefenintegration ist für eine quantitative Durchflussbestimmung eine Modellannahme für das Strömungsprofil notwendig. In Bergeler und Krambeer (2004) sowie in Menn (2010) wurden dementsprechend nur qualitative Aussagen über die gemessene Form des Strömungsprofils und ein quantitative Skalierung zum theoretischen Verlauf getroffen. Insgesamt ist ein solches Verfahren nicht echtzeitfähig und besitzt keine ausreichende Zeitauflösung und ist ferner auf bekannte Strömungsprofile beschränkt. Weiterhin erfordert das Verfahren sehr hohe Streupartikelkonzentrationen und große Streulichtpartikel und kann keine lokalen Querkomponenten in der Strömung erfassen, die beispielsweise bei Verwirbelungen oder beispielsweise bei einem Drall des Fluids in einem Strömungsquerschnitt entstehen.

### OFFENBARUNG DER ERFINDUNG

Aufgabe der Erfindung ist die weitere Verbesserung einer Strömungsmessvorrichtung zur Messung des Volumenstroms und der Fließgeschwindigkeit eines innerhalb eines durch ein geschlossenen Querschnitt strömenden Fluids durch eine kontinuierliche zeitaufgelöste Identifikation des Strömungsprofils und die Schaffung eines entsprechenden Verfahrens hierzu, wobei die Strömungsmessvorrichtung ein optisches Messverfahren nutzen soll und Ausgangssignale der Strömungsmessung sollen in Echtzeit ausgegeben werden können.

Diese Aufgabe wird ausgehend von einem Strömungsmessverfahren gemäß dem Oberbegriff des Anspruches 1 und ausgehend von einem Verfahren gemäß dem Oberbegriff des Anspruches 10 mit den jeweils kennzeichnenden Merkmalen gelöst. Vorteilhafte Weiterbildungen der Erfindung sind in den abhängigen Ansprüchen angegeben.

Die Erfindung schließt die technische Lehre ein, dass mit der Lichtquelle wenigstens eine Messebene und die darin vorhandenen Partikel beleuchtet werden, wobei die Partikel auf der Sensoreinheit abgebildet werden und die Sensoreinheit ein CMOS-Array-Detektor mit einem direkt verbundenen FPGA aufweist und wobei die Sensoreinheit mit wenigstens zwei oder mit einer Vielzahl von Einzeldetektoren bereitgestellt wird, mit der Sensorsignale betreffend Bildpunkte und/oder Bildlinien ausgegeben werden, und dass die Sensorsignale betreffend Bildpunkte und/oder Bildlinien unter Entfall einer Zwischenspeicherung mittels der Sensoreinheit kontinuierlich und in Echtzeit mittels Ortsfiltertechnik in wenigstens ein Geschwindigkeitsprofil umgerechnet werden, die Sensoreinheit aus dem zeitlich abhängigen Geschwindigkeitsprofil kontinuierlich und in Echtzeit Strömungsparameter, umfassend wenigstens zwei der folgenden Parameter: Volumenstrom, kumulierte Durchflussment Strömungsprofil, turbulenter/laminarer Strömungszustand, Turbulenzgrad, Turbulenzspektrum, Drall, die Sensoreinheit einen oder mehrere integrale Strömungszustandsparameter kontinuierlich, zeitaufgelöst und in Echtzeit berechnet und ausgibt, wobei der Sensoreinheit eine Recheneinheit nachgeschaltet wird, mit der die Geschwindigkeitsprofile auf der Grundlage der Integration und der Gewichtung der Bildpunkte und/oder Bildlinien durch das FPGA als integrale Strömungsparameter von der Recheneinheit verarbeitet werden und als Ausgangsignal von einem Ausgabemodul ausgegeben werden.

Kerngedanke der Erfindung ist der Betrieb von zwei oder von mehreren Einzeldetektoren, die die Sensoreinheit bilden, und es können mit der einer nachgeschalteten Rechnereinheit in Echtzeit, also mit definierter zeitlicher Verzögerung, kontinuierlich bereitgestellt werden können.

Der wesentliche Vorteil liegt in der Kopplung von wenigstens einer Sensoreinheit zur optischen Strömungsmessung mit einem FPGA als Sensor zwischen der Sensoreinheit und einer nachgeschalteten Rechnereinheit. Dadurch wird eine Echtzeitfähigkeit der Bereitstellung des Ausgangssignal der Strömungsmessvorrichtung erreicht und es kann ein entsprechendes Verfahren ausgeführt werden, mit dem unter Nutzung der Strömungsmessvorrichtung mit einfachen Mitteln aufgrund des Einsatzes eines FPGA's zwischen der Sensoreinheit und der Rechnereinheit eine Echtzeit-Ausgabe von Ausgangssignalen der Vorrichtung möglich ist.

Bei geringen Partikelkonzentrationen bzw. bei sehr kleinen Partikeln in wenig verunreinigten Fluiden, z.B. Leitungswasser, ist die Streulichtleistung sehr gering. Erfindungsgemäß wird daher die Detektoreinheit unter Streulichtbereichen positioniert die eine höhere Streulichtleistung aufweisen, vorzugsweise Vorwärtsstreuung, Rückwärtsstreuung oder andere Streuwinkelpositionen.

Weiterer Vorteil dieser nichtsenkrechten Beobachtung der Messebene ist, dass das Detektor-Array den gesamten Strömungsquerschnitt in der Messebene auch bei gekrümmten, speziell auch kreisförmigen Rohrquerschnitten, erfasst. Mittels gewichteter Integration über das gesamte Strömungsprofil sind auch Volumenströme von Strömungen mit unsymmetrischen und/oder nicht voll ausgebildeten Strömungsprofilen möglich.

Insbesondere ergibt sich die Möglichkeit, einen FPGA an mehrere Sensoren zu koppeln, sodass nicht nur eine, sondern auch mehrere Messebenen ausgewertet werden können, um eine sehr genaue Erfassung der Fließgeschwindigkeit eines Fluids beispielsweise in einem Rohrabschnitt zu bestimmen, in dem das Fluid keine stationäre Strömung in Strömungsrichtung aufweist. Insbesondere ist erfindungsgemäß vorgesehen, dass das FPGA eine Programmkonfiguration aufweist, mit der von den Sensoreinheiten erfasste Bildpunkte und/oder Bildlinien basierend auf den bewegten Partikeln ein oder mehrere Bewegungsvektoren des Fluids erzeugt werden. Insbesondere kann die Programmkonfiguration dazu ausgebildet sein, mehrdimensionale Bewegungen der Partikel umzurechnen und als eindimensionales Ausgangssignal mittels des FPGA auszugeben. Mit der Verwendung nur eines FPGA's insbesondere in Verbindung mit mehreren Sensoren können Fluidbewegungen in Strömungsrichtung und quer zur Strömungsrichtung erfasst und ausgewertet werden, beispielsweise wenn Turbulenzen oder ein Drall in der Strömung des Fluids vorhanden sind.

Der Rechnereinheit ist ein Ausgabemodul nachgeschaltet, an das die Bewegungsvektoren des Fluids von der Rechnereinheit ausgebbar sind und durch das basierend auf den Bewegungsvektoren eine Strömungsgeschwindigkeit des Fluids als Ausgangssignal angegeben werden kann.

Im Rahmen der Erfindung ist es insbesondere vorgesehen, dass die Sensoreinheit wenigstens einen CMOS-Sensor aufweist, alternativ besteht auch die Möglichkeit, dass die Sensoreinheit eine Anordnung von Photodioden und/oder wenigstens eine Zylinderlinsenarray-Zeilensensoranordnung aufweist, wobei auch wenigstens ein CCD-Sensor zur Bildung der Sensoreinheit vorgesehen sein kann. Auf den CMOS-Sensor kann mit einer entsprechenden Optik die flächige Messebene abgebildet werden, sodass Bewegungen der Partikel in einer ersten Richtung und in einer senkrecht dazu ausgebildeten zweiten Richtung erfasst werden können. Die Erfassung erfolgt dabei insbesondere auf Basis der Ortsfiltertechnik, wobei Bewegungen des Fluids quer zur Strömungsrichtung erfasst und mittels des FPGA auf die Geschwindigkeitskomponente in Strömungsrichtung umgerechnet werden können.

Die Messebene ist innerhalb des Strömungsvolumens gebildet, wobei einer ersten Messebene eine erste Sensoreinheit und einer zweiten Messebene eine zweite Sensoreinheit zugeordnet ist, wobei die Messebenen in Strömungsrichtung des Fluids hintereinander folgend angeordnet sind, wobei eine Anordnung hintereinander nicht zwingend notwendig, aber vorteilhaft ist. Durch die Anordnung mehrerer Messebenen kann die Genauigkeit der Strömungsmessung weiter verbessert werden, und insbesondere können die Messebenen unter einem bekannten Winkelversatz zueinander angeordnet sein, beispielsweise 60° bis 180° und bevorzugt 90°. Auch ist es von Vorteil, wenn die Messebenen zur Normalen der Sensoreinheiten einen Winkel zwischen 20° bis 50° und insbesondere von 30° aufweisen. Ebenfalls kann es vorteilhaft sein, wenn der Winkel der Messebenen zur Normalen der zugeordneten Sensoreinheit 45° beträgt.

Mit besonderem Vorteil ist die Beobachtungsrichtung der Sensoreinheit damit unter einem Winkelversatz entgegen der Emissionsrichtung eines Lichtes einer Lichtquelle eingerichtet, wobei der Winkelversatz wie vorstehen beschreiben beispielsweise 20° bis 50° und insbesondere 30° in Vorwärts- oder Rückwärtsstreuung beträgt. Dadurch kann eine besonders hohe Streulichtintensität ausgenutzt werden, wodurch die Messgenauigkeit weiter verbessert wird.

Ein noch weiterer Vorteil wird erreicht, wenn mehrere Lichtquellen so zueinander und zu der Sensoreinheit angeordnet sind, dass mehrere Messebenen von einer Sensoreinheit erfassbar sind. Beispielsweise können zwei Messebenen ausgebildet sein, die senkrecht zueinander stehen. Insbesondere können wenigstens zwei Lichtquellen so zueinander und zu der Sensoreinheit angeordnet werden, dass wenigstens zwei mit einer gemeinsamen Schnittlinie oder in Strömungsrichtung hintereinander liegende Messebenen geschaffen und von nur einer Sensoreinheit erfasst werden.

Die eine Sensoreinheit befindet sich beispielsweise in diametral gegenüberliegender Anordnung zu den beiden Messebenen, die durch die entsprechende Anordnung der Lichtquellen erzeugt werden, sodass ebenfalls als Gegenlicht das Streulicht mit einer Beobachtungsrichtung erfasst wird, die in der Winkelhalbierenden zwischen den beiden Lichtquellen liegt. Die Lichtquellen können dabei beispielsweise Licht mit unterschiedlichen Wellenlängen aussenden oder die Lichtquellen werden gepulst betrieben, und die Lichtpulse werden beispielsweise abwechselnd von den Lichtquellen erzeugt. Damit kann mittels der einen Sensoreinheit, insbesondere ausgebildet als CMOS-Sensor, sowohl eine erste Messebene als auch eine zweite Messebene erfasst werden.

Insbesondere können zwei Messebenen auch so ausgebildet sein, dass sie auf unterschiedlichen Bereichen des Sensors abgebildet werden. Beispielsweise können zwei oder mehr parallele Messebenen mit einem Sensor abgebildet werden, sodass sich die Abbildungen nicht überlappen.

Die Erfindung richtet sich weiterhin auf ein Verfahren zur Strömungsmessung des Fluids mittels der vorstehend beschriebenen Strömungsmessvorrichtung.

Insbesondere richtet sich die Erfindung weiterhin auf eine Strömungsmessvorrichtung, die einen Rohrabschnitt aufweist, der mit einem Fluid durchströmbar ist, und die zumindest eine Lichtquelle aufweist, mit der Licht in den Rohrabschnitt einstrahlbar ist und mit der in wenigstens einer Messebene die im Fluid vorhandenen Partikel beleuchtbar sind, wobei wenigstens eine Sensoreinheit vorgesehen ist, mit der im Fluid vorhandene Partikel innerhalb einer Messebene erfassbar sind, und wobei die Sensoreinheit wenigstens zwei oder eine Vielzahl von Einzeldetektoren aufweist, mit der Sensorsignale ausgebbar sind, und wobei der Sensoreinheit eine Recheneinheit nachgeschaltet ist, mit der die Sensorsignale mit einer Integration und Wichtung der Einzelsignale der Einzeldetektoren unter Anwendung der Ortsfiltertechnik in Echtzeit verarbeitbar und als Ausgangssignal ausgebbar sind.

Weiterhin ist gemäß einer vorteilhaften Ausführungsform ein Feld-programmierbares-Gatter-Array in Anordnung zwischen der Sensoreinheit und der Recheneinheit vorgesehen, das mit einer Programmkonfiguration betreibbar ist, mit der von der Sensoreinheit erfasste Bildpunkte und/oder Bildlinien basierend auf den bewegten Partikeln Bewegungsvektoren des Fluids erzeugbar sind.

Zusätzlich ist es von Vorteil, dass bei einer Aufbereitung der Daten des oder der Sensoreinheiten mittels des FPGA's mehrdimensionale Bewegungen der Partikel entlang und quer zu einer Strömungsrichtung zu einer Strömungsgeschwindigkeit des Fluids umgerechnet und ausgegeben werden. Insbesondere ist vorgesehen, dass die wenigstens eine Lichtquelle kontinuierliches oder gepulstes Licht ausgibt und/oder es ist vorgesehen, dass die wenigstens eine Lichtquelle Licht mit voneinander unterschiedlichen Wellenlängen ausgibt.

Mit der erfindungsgemäßen Strömungsmessvorrichtung und insbesondere mit dem erfindungsgemäßen Verfahren kann die Strömungsgeschwindigkeit eines Fluids ermittelt werden, beispielsweise bei einem Durchfluss durch einen Rohrabschnitt oder durch einen Kanal mit einem geschlossenen Querschnitt, und es kann die Ortsfiltertechnik Verwendung finden. Der Vorteil sind die Erfassung lokaler Geschwindigkeitsvektoren innerhalb der Strömung des Fluids, damit mittels des FPGA und der nachgeschalteten Rechnereinheit nicht nur eine eindimensionale Strömung ermittelt, sondern ein oder mehrere Strömungsprofile in Querschnittsrichtung rekonstruiert werden kann. Die allermeisten Fluide weisen hinreichend viele Partikel auf, die mit der Strömung im Fluid mitbewegt werden, sodass eine optische Strömungsmessung ausgeführt werden kann.

Realisiert wird dies insbesondere durch die Bildung mehrerer Messebenen, insbesondere mehrerer Messebene innerhalb des Strömungsvolumens, die zueinander einen Winkel einschließen oder versetzt zueinander liegen. Insbesondere durch die Zweidimensionalität der Sensoreinheit, der vorzugsweise als CMOS- Sensor ausgebildet ist, können mehrere Lichtschnitte gebildet werden, und die Sensoreinheiten können diskreten Lichtquellen zugeordnet sein, die verschiedene Wellenlängen oder verschiedene Pulsfolgen aufweisen oder diese aussenden oder auf unterschiedlichen Bereichen des Sensors abgebildet werden. Insbesondere können die Lichtquellen farblich unterschiedliches Licht oder zeitlich versetzte Pulse aussenden, die mit den Sensoreinheiten entsprechend erfasst werden. Damit können räumlich voneinander getrennt angeordnete Messebenen auch mit nur einer Sensoreinheit erfasst werden. Im Ergebnis ergibt sich die Möglichkeit der Echtzeiterfassung und Identifikation unsymmetrischer Strömungsprofile innerhalb eines Strömungsquerschnitts, beispielsweise innerhalb eines Rohrabschnitts. Auch eignet sich ein solches Verfahren basierend auf der Ortsfiltertechnik dazu, Fluide mit sehr geringer Partikeldichte messen zu können.

Insbesondere ergibt sich der Vorteil, dass durch den Einsatz der optischen Ortsfiltertechnik die Beobachtungsrichtung im Verhältnis zur Lichteinkopplungsrichtung so gewählt werden kann, dass eine optimale Intensität der Partikelabbildung durch die bessere Streulichtleistung erreicht wird, ohne dass ein optisches Prisma oder ein Scheimpflugadapter oder eine Brechungsindexanpassung zwangsweise eingesetzt werden muss, insbesondere bei einer Vorwärts- oder Rückwärtsstreuung mit einem Winkelversatz von etwa 20° bis 50°. Insbesondere durch die Einstellung eines 30°-Winkels ist es möglich, mehrere Messebenen aus verschiedenen Winkeln durch nur eine Sensoreinheit zu erfassen, wodurch eine kostengünstige Realisierung der Strömungsmessvorrichtung mit zwei Lichtquellen und nur einer Sensoreinheit ermöglicht wird.

Wird gepulstes Licht verwendet, insbesondere anstatt einer Dauerbeleuchtung, können höhere Lichtleistungen der Lichtquelle oder der Lichtquellen realisiert werden, und es entsteht eine geringere Bewegungsunschärfe. Auch sind mehrere Ebenen zur Beobachtung realisierbar, und es entsteht ein besserer Signal-Rausch-Abstand in der Sensoreinheit durch die Reduktion von Streulicht und des thermischen Rauschens.

Die erfindungsgemäße Strömungsmessvorrichtung ermöglicht insbesondere auch die Detektion des Verschmutzungsgrades beziehungsweise der Signalqualität bei einzelnen CMOS- Sensoren zur Bildung der Sensoreinheiten. Der Vorteil liegt insbesondere in der Detektion und damit der Reduktion eines Prozessdriftes, und es kann eine Verschmutzungserkennung im Fluid erfolgen, insbesondere können Wartungsmeldungen abgegeben werden, beispielsweise zur vorausschauenden Wartung eines fluidischen Systems.

Das Verfahren benötigt keine optische Kalibrierung, da bei geraden Rohrstücken im Bereich der Messebene keine Verzeichnung entlang der Hauptströmungsrichtung aufgrund von gekrümmten Oberflächen vorhanden ist. Bei typischerweise bekanntem Rohrquerschnitt und aufgrund der Abbildung des gesamten Rohrquerschnitts auf dem Detektor-Array kann der Abbildungsmaßstab einfach aus den Bilddaten ermittelt werden.

Die Messebene wird mit einer Optik auf das Detektor-Array abgebildet, wobei die Optik erfindungsgemäß keine zusätzlich Korrektur der Schärfe, z.B. typische Scheimflug-Konfiguration, oder Verzeichnung erzeugen muss. Bei Beobachtung unter einem schrägen Winkel können die Abbildungsparameter, wie z.B. Fokus, im Bild inhomogen sein. Aufgrund der Erfindung hat dies keinen Einfluss auf die Bestimmung des Strömungsprofils. Bei Bewegung des Fluids bewegen sich die mitgeführten und beleuchtetet Partikel mit dem Fluid entlang der Strömungslinien. Aufgrund der schrägen Beobachtung sind die bewegten Partikelabbildungen auf dem Detektor-Array unterschiedlich stark defokussiert. Das Detektor-Array kann dabei als Matrixsensor, z.B. flächiger CCD-, CMOS-, oder Smart-Pixel-Sensor, aber auch als Photodioden-Array realisiert werden.

Erfindungsgemäß werden die Werte des Detektorarrays mit einer oder mehreren Wichtungsfunktionen multipliziert und über Teilbereiche des Detektor-Arrays, vorzugsweise entlang der Strömungslinien, integriert bzw. summiert. Dies ermöglicht trotz inhomogener Defokussierung die Bestimmung von geschwindigkeitsproportionalen Messwerten, welche repräsentativ für die ausgewählten Teilbereiche der Strömung sind.

Vorteil dieses Verfahrens ist, dass für die Geschwindigkeitsbestimmung nur zwei Operationen pro Element des Array-Detektors, eine konstante Wichtung und eine Summation, notwendig sind. Erst dadurch wird, im Vergleich zu anderen Techniken (PIV) eine ausreichende zeitliche Auflösung und eine Echtzeitfähigkeit des Verfahrens möglich.

Diese Operationen, Wichtung und Integration/Summation, können zweckmäßigerweise optisch, elektronisch oder rechentechnisch erfolgen. Eine optische oder elektronische Wichtung und/oder Integration bedingen Hardwareänderungen oder spezielle Optiken und Sensoren, während die rechentechnische Wichtung und Summation mit einer nachgeschalteten echtzeitfähigen Auswertehardware bzw. Recheneinheit möglich wird.

Die rechentechnische Realisierung besitzt darüber hinaus den Vorteil, die ausgewählten Teilbereiche und die Wichtung dynamisch an den Prozess oder den momentanen Prozesszustand anzupassen. Zweckmäßigerweise würden die Teilbereiche in Hauptströmungsrichtung gelegt, so dass jeder Teilbereich einen lokalen Strömungsprofilmesswert erzeugt. Bei großem Dynamikbereich der Strömung, z.B. von laminar bis hoch-turbulent, bei zeitlich hochdynamischen Volumenstromänderungen, oder bei nicht vollständig ausgebildeten Strömungsprofilen können die Teilbereich und die Wichtungsfunktionen modifiziert, angepasst oder in der Anzahl verändert werden, um beispielsweise Querkomponenten im Strömungsprofil oder Rückströmungen zu erfassen. Vorteil ist, dass so die Dynamik der Volumenstrommessung mehrere Größenordnungen beträgt.

Die Erfindung schließt eine spezialisierte Recheneinheit zur echtzeitfähigen und zeitaufgelösten Verarbeitung der Eingangsdaten der Array-Detektoren, insbesondere ein Field Programmable Gate Array (FPGA), ein. Die Recheneinheit empfängt die Daten des Array-Detektors und implementiert die Wichtungsfunktion oder Wichtungsfunktionen, die Summation über die Teilbereiche, die Umrechnung in Geschwindigkeitswerte sowie die Berechnung des Volumenstroms und des Durchflusses. Je nach Ausgestaltung des Verfahrens kann die Wichtung und/oder Summation optisch oder elektronisch vor und/oder die Geschwindigkeitsbestimmung und Volumenstromberechnung nach der Recheneinheit in einem separaten Controller erfolgen.

### BEVORZUGTE AUSFÜHRUNGSBEISPIELE DER ERFINDUNG

Weitere, die Erfindung verbessernde Maßnahmen werden nachstehend gemeinsam mit der Beschreibung bevorzugter Ausführungsbeispiele der Erfindung anhand der Figuren näher dargestellt. Es zeigt:
- Figur 1: eine schematische Ansicht der Komponenten der Strömungsmessvorrichtung,
- Figur 2a: eine schematische Ansicht eines Rohrabschnittes mit einer einzelnen Messebene und einem der Messebene zugeordneten Sensoreinheit,
- Figur 2b: eine schematische Ansicht eines Rohrabschnittes mit einer ersten Messebene, mit einer zweiten Messebene und mit zwei den jeweiligen Messebenen zugeordneten Sensoreinheiten,
- Figur 3: eine schematische Ansicht des Rohrabschnittes mit zwei Lichtquellen und eine Sensoreinheit zur Erkennung von Partikeln,
- Figur 4: eine schematische Ansicht einer Zylinderlinsenarray-Zeilensensoranordnung sowie von zwei Photodioden und
- Figur 5: eine schematische Ansicht einer Sensoreinheit, ausgebildet als CMOS- Sensor zur Beobachtung von Partikeln in einem Fluid.

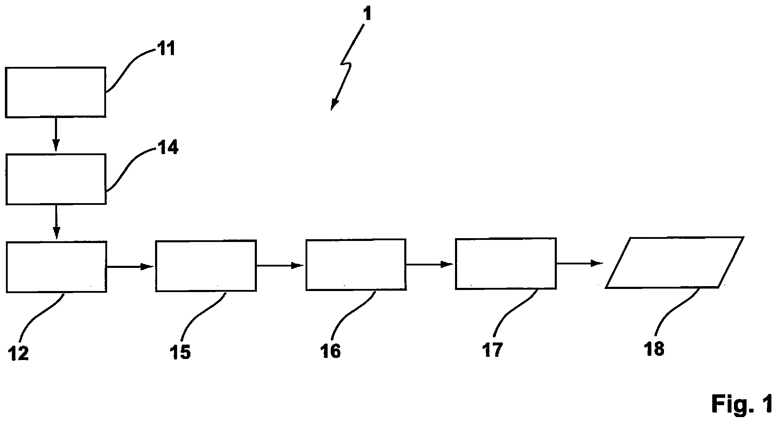

Figur 1 zeigt in einer schematischen Ansicht die Bestandteile einer Strömungsmessvorrichtung 1 gemäß der Erfindung. Wenigstens eine Lichtquelle 11 strahlt in wenigstens eine Messebene 14 ein beziehungsweise die Lichtebene der Lichtquelle 11 innerhalb des Fluides bildet wenigstens eine zugeordnete Messebene 14. Weiterhin ist eine Sensoreinheit 12 schematisch gezeigt, der zur Beobachtung der Messebene 14 beziehungsweise des eingestrahlten Lichtes der Lichtquelle 11 dient, und der Sensoreinheit 12 ist ein Feld-programmierbares-Gatter-Array 15 nachgeschaltet.

Derartige Feld-programmierbare-Gatter-Arrays 15 werden allgemein auch als FPGA's 15 bezeichnet, und das dargestellte FPGA 15 liefert eine aufbereitete Information an eine Rechnereinheit 16. Die Rechnereinheit 16 ist dazu ausgebildet, Ausgangssignale an ein Ausgabemodul 17 bereitzustellen, das die Geschwindigkeitsinformation des Fluids schließlich als Ausgangssignal 18 ausgibt.

Die wenigstens eine Lichtquelle 11 ist beispielsweise als Laserlichtquelle ausgebildet, wobei für das vorliegende Messverfahren auch Leuchtdioden (LED's) zum Einsatz kommen können. Für die Ausführung der Ortsfiltertechnik mit der erfindungsgemäßen Strömungsmessvorrichtung 1 ist nicht grundsätzlich der Einsatz von kohärentem Licht erforderlich, sodass auch eine Leuchtdiode als Lichtquelle 11 dienen kann.

Die Lichtquelle 11 emittiert entweder kontinuierliches Licht oder gepulstes Licht, und es ist denkbar, dass die Lichtquelle 11 oder mehrere Lichtquellen 11 unterschiedliche Wellenlängen emittieren können.

Die Messebenen 14 bilden Messebenen innerhalb des Strömungsvolumens, und jeder Messebene 14 ist eine Sensoreinheit 12 zugeordnet, wobei eine Sensoreinheit 12 auch mehrere Messebenen 14 sensieren kann. Innerhalb des Strömungsvolumens können insbesondere zwei Messebenen 14 vorgesehen sein, die in Strömungsrichtung des Fluids aufeinanderfolgend angeordnet sind und Lichtschnitte bilden, die zueinander gedreht sind, beispielsweise um 90°. Eine entsprechende Rotation weist dabei auch die Anordnung von zwei Sensoreinheiten 12 auf, die jedem der Messebenen 14 zugeordnet sind.

Die Sensoreinheit 12 oder die Sensoreinheiten 12 werden insbesondere durch CMOS- Sensoren gebildet, wobei auch die Möglichkeit besteht, beispielsweise zwei Photodioden entsprechend anzuordnen, vorzugsweise in Verbindung mit einem optischen Gitter, das der Sensoreinheit 12 vorgelagert ist. Auch besteht die Möglichkeit, eine Zylinderlinsenarray-Zeilensensoranordnung zur Bildung von Sensoreinheiten 12 vorzusehen, wodurch die Strömungsmessvorrichtung 1 kostengünstig ausgeführt sein kann.

Das nachfolgend auf der Sensoreinheit 12 gezeigte FPGA 15 weist eine Programmkonfiguration auf, mit der von der Sensoreinheit 12 erfasste Bildpunkte und/oder Bildlinien basierend auf den bewegten Partikeln innerhalb des Fluids Bewegungsvektoren der Partikel und damit des Fluids erzeugt werden können. Die Erzeugung der Bewegungsvektoren erfolgt dabei in Echtzeit, und die entsprechenden Informationen werden an eine nachgeschaltete Rechnereinheit 16 ausgegeben. Mit der Rechnereinheit 16 kann schließlich über ein Ausgabemodul 17 das Ausgangssignal 18 ausgegeben werden.

Ein besonderer Vorteil des Einsatzes des FPGA 15 liegt darin, dass Bewegungen des Fluids quer zur Hauptströmungsrichtung des Fluids erfasst und auf eine 2D-Information umgerechnet werden können, sodass schließlich ein Vergleichswert geschaffen wird, mit dem über dem gesamten Strömungsquerschnitt ein entsprechender Geschwindigkeitsvektor gebildet wird, der sich als finale Vektorinformation ergibt, wobei die Strömung auch Rotationsanteile oder Verwirbelungen um die Längsachse der Strömungsrichtung aufweisen kann. Diese Umrechnung erfolgt dabei im FPGA 15 und kann als einfache Vektorinformation an die Rechnereinheit 16 ausgegeben werden.

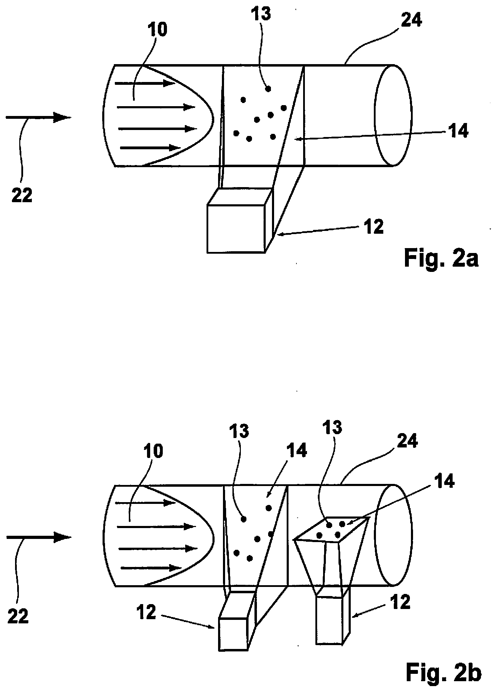

Figur 2a zeigt ein erstes Beispiel eines Rohrabschnittes 24, der mit einem Fluid 10 in einer Strömungsrichtung 22 durchströmt wird. Beispielhaft ist eine einzige Messebene 14 dargestellt, die eine Messebene bildet, wobei die Hauptströmungsrichtung 22 in der Messebene liegt. Die Messebene 14 ist dabei durch eine nicht gezeigte Lichtquelle für eine außenseitige Einstrahlung von Licht innerhalb des Strömungsvolumens im Rohrabschnitt 24 gebildet. Der Rohrabschnitt 24 weist hierfür beispielsweise einen lichttransparenten Wandungsbereich auf.

In dem Fluid 10 sind Partikel 13 vorhanden, die innerhalb der Messebenen 14 von der Sensoreinheit 12 erfasst werden. Die Erfassung der Bewegung der Partikel 13 erfolgt dabei sowohl in Strömungsrichtung 22 als auch quer zur Strömungsrichtung 22 innerhalb der Messebene 14.

Figur 2b zeigt eine Ansicht des Rohrabschnittes 24, der mit dem Fluid 10 in Strömungsrichtung 22 durchströmt wird, und die Anordnung weist eine erste Messebene 14 und eine nachgelagerte zweite Messebene 14 auf, wobei eine erste Sensoreinheit 12 der ersten Messebene 14 und eine weitere Sensoreinheit 12 der zweiten Messebene 14 zugeordnet ist. Die Messebenen 14 sind um 90° zueinander versetzt angeordnet, wobei in jeder der Messebenen 14 die Strömungsrichtung 22 als ein Vektor in der Ebene liegt.

Werden die Bewegungen der Partikel 13 in den Messebenen 14 erfasst, können auch Rotationen und Verwirbelungen, insbesondere ein Drall, in der Strömung des Fluids 10 erkannt werden, wobei die Informationen aus beiden Sensoreinheiten 12 dem FPGA 15 (siehe Figur 1) übermittelt werden. Insbesondere dadurch wird ermöglicht, eine Vielzahl von lokalen Geschwindigkeitsvektoren zu bestimmen, damit entweder ein oder mehrere 1D-2C-Strömungsprofile oder sogar im Idealfall ein 2D-3C-Strömungsprofil in Querschnittsrichtung rekonstruiert werden kann. Erst durch die Anordnung von zwei hintereinander liegenden Messebenen 14 wird dies ermöglicht, wobei die Messebenen 14 auch ineinander liegen können. Insbesondere kann die Sensoreinheit 12 zweidimensional ausgebildet sein oder es können mehrere Lichtschnitte vorgesehen werden, welche verschiedene Wellenlängen aufweisen, die zeitlich versetzt, insbesondere gepulst oder räumlich voneinander getrennt sind. Daraus ergibt sich der besondere Vorteil, dass unsymmetrische Strömungsprofile gemessen werden können, sodass mit dem nachgeschalteten FPGA 15 die Bewegungsvektoren der Partikel 13 zu einer Geschwindigkeitsinformation des Fluids 10 im Rohrquerschnitt 24 aufbereitet werden kann.

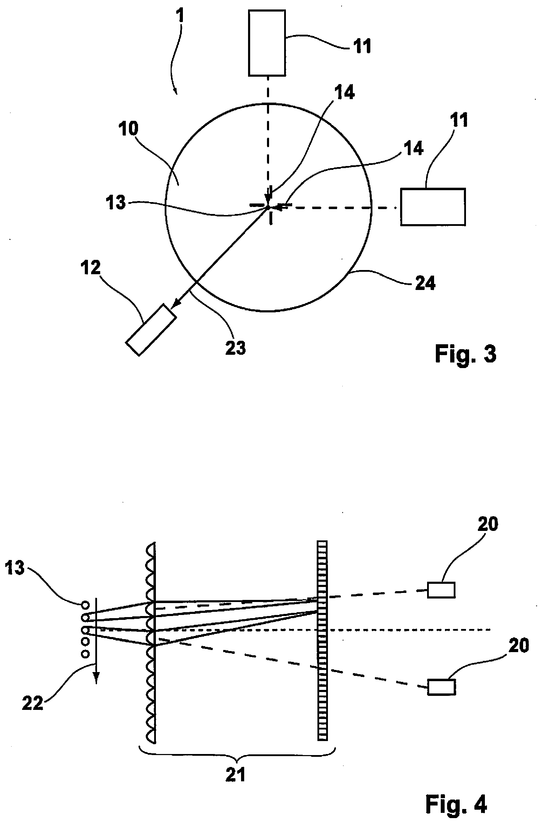

Figur 3 stellt eine spezielle Variante einer Strömungsmessvorrichtung 1 dar, und der Rohrabschnitt 24 ist zur Veranschaulichung in einer Vorderansicht gezeigt und wird mit dem Fluid 10 durchströmt. Im Fluid 10 befinden sich Partikel 13, wobei beispielhaft ein Partikel 13 dargestellt ist. Die Wandung des Rohrabschnittes 24 ist beispielsweise transparent ausgebildet, um Licht mittels der Lichtquellen 11 einzustrahlen.

Die Anordnung weist eine erste Lichtquelle 11 und eine innerhalb des Rohrabschnittes 24 um 90° um dessen Längsachse versetzt angeordnete zweite Lichtquelle 11 auf. Beide Lichtquellen 11 strahlen damit senkrecht zueinander Licht in das Fluid 10 ein, sodass sich zwei Messebenen 14 ergeben, deren Messebenen senkrecht aufeinander stehend ausgebildet sind. In der Winkelhalbierenden zwischen den Erstreckungsebenen der beiden Messebenen 14 befindet sich außerhalb des Rohrabschnittes 24 die Sensoreinheit 12, sodass die Beobachtungsrichtungen 23 zu beiden Lichtausbreitungsrichtungen der Lichtquellen 11 jeweils einen Winkel von 135° einschließen. Wird die Strömungsmessvorrichtung 1 betrieben, und emittieren die Lichtquellen 11 entsprechendes Licht, das mit der Sensoreinheit 12 als am Partikel 13 gebildetes Streulicht empfangen wird, so kann mit einer Sensoreinheit 12 in zwei Messebenen 14 gemessen werden.

Figur 4 zeigt beispielhaft Partikel 13, die sich in Strömungsrichtung 22 bewegen. Mit einer nicht näher dargestellten Lichtquelle wird ein Streulicht erzeugt, das zunächst durch ein Zylinderlinsenarray-Zeilensensoranordnung 21 gelangt, wobei mit den Zeilensensoren der Zeilensensoranordnung die Bewegung der Partikel 13 detektiert werden kann. Alternativ können Photodioden 20 Anwendung finden, die vereinfachend ebenfalls in der Figur 4 dargestellt sind. Insbesondere durch das Zylinderlinsenarray gelangt das Streulicht abwechselnd an die gezeigten Photodioden 20, sodass damit ebenfalls eine Bewegung der Partikel 13 detektiert werden kann.

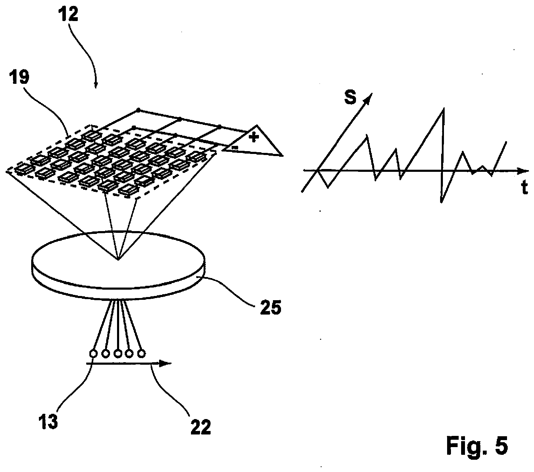

Figur 5 zeigt eine Sensoreinheit 12, der beispielhaft als CMOS- Sensor 19 ausgebildet ist. Bewegen sich die beispielhaft gezeigten Partikel 13 unterhalb eines Objektivs 25, so werden die einzelnen Pixel des CMOS-Sensors 19 nacheinander mittels einer nicht gezeigten Lichtquelle und an den Partikeln 13 erzeugtes Streulicht beleuchtet, sodass durch das Rückstreulicht und die Belichtung des CMOS- Sensors 19 ein Signal S über der Zeit t erzeugt wird, das eine Wellenform aufweist. Je mehr Partikel 13 sich in dem Fluid befinden, desto größer wird dabei die Amplitude des Signals S, wodurch über der Zeit t eine Bewegungsgeschwindigkeit und eine Bewegungsrichtung der Partikel 13 detektiert werden kann. Durch die Zweidimensionalität des CMOS- Sensors 19 kann dabei eine Bewegung der Partikel 13 im Fluid sowohl in Strömungsrichtung 22 als auch quer zur Strömungsrichtung 22 detektiert werden, was anschließend mit dem FPGA 15 (siehe Figur 1) in ein vollständig rekonstruiertes digital bereitgestelltes Strömungsprofil rekonstruiert werden kann.

Die Erfindung beschränkt sich in ihrer Ausführung nicht auf das vorstehend angegebene, bevorzugte Ausführungsbeispiel. Vielmehr ist eine Anzahl von Varianten denkbar, welche von der dargestellten Lösung auch bei grundsätzlich anders gearteten Ausführungen Gebrauch macht.

### Bezugszeichenliste:

- 1: Strömungsmessvorrichtung

- 10: Fluid
- 11: Lichtquelle
- 12: Sensoreinheit
- 13: Partikel
- 14: Messebene
- 15: Feld-programmierbares-Gatter-Array
- 16: Rechnereinheit
- 17: Ausgabemodul
- 18: Ausgangssignal
- 19: CMOS- Sensor
- 20: Photodiode
- 21: Zylinderlinsenarray - Zeilensensoranordnung
- 22: Strömungsrichtung
- 23: Beobachtungsrichtung
- 24: Rohrabschnitt
- 25: Objektiv

- S: Sensorsignal
- t: Zeit

## Patentansprüche

1. Strömungsmessverfahren zur optischen Messung von sich zeitlich ändernden Strömungsparametern eines durch einen geschlossenen Querschnitt strömenden Fluids (10), mit wenigstens einer Lichtquelle (11) und mit wenigstens einer Sensoreinheit (12), mit der im Fluid (10) vorhandene Partikel (13) innerhalb einer Messebene (14) erfasst werden,
wobei
- mit der Lichtquelle (11) wenigstens eine Messebene und die darin vorhandenen Partikel (13) beleuchtet werden, wobei
- die Partikel auf der Sensoreinheit (12) abgebildet werden und **dadurch gekennzeichnet, dass**
- die Sensoreinheit (12) ein CMOS-Array-Detektor (19) mit einem direkt verbundenen FPGA (15) aufweist und wobei die Sensoreinheit (12) mit wenigstens zwei oder mit einer Vielzahl von Einzeldetektoren (12a, 12b, 12c, 12b) bereitgestellt wird, mit der Sensorsignale (S) betreffend Bildpunkte und/oder Bildlinien ausgegeben werden, und dass
- die Sensorsignale (S) betreffend Bildpunkte und/oder Bildlinien unter Entfall einer Zwischenspeicherung mittels der Sensoreinheit (12) kontinuierlich und in Echtzeit mittels Ortsfiltertechnik in wenigstens ein Geschwindigkeitsprofil umgerechnet werden,
- die Sensoreinheit (12) aus dem zeitlich abhängigen Geschwindigkeitsprofil kontinuierlich und in Echtzeit Strömungsparameter, umfassend wenigstens zwei der folgenden Parameter Volumenstrom, kumulierte Durchflussmenge, Strömungsprofil, turbulenter/laminarer Strömungszustand, Turbulenzgrad, Turbulenzspektrum, Drall,
- die Sensoreinheit (12) einen oder mehrere integrale Strömungszustandsparameter kontinuierlich, zeitaufgelöst und in Echtzeit berechnet und ausgibt,
- wobei der Sensoreinheit (12) und dem Feldprogrammierbaren-Gatter-Array (15) eine Recheneinheit (16) nachgeschaltet wird, mit der die Geschwindigkeitsprofile auf der Grundlage der Integration und der Gewichtung der Bildpunkte und/oder Bildlinien durch das FPGA (15) als integrale Strömungsparameter von der Recheneinheit (16) verarbeitet werden und als Ausgangsignal (18) von einem Ausgabemodul (17) ausgegeben werden.

2. Strömungsmessverfahren nach Anspruch 1,
**dadurch gekennzeichnet,**
**dass** zwischen der Sensoreinheit (12) und der Recheneinheit (16) ein Feld-programmierbares-Gatter-Array (15) eingebracht wird, das mit einer Programmkonfiguration betrieben wird, mit der von der Sensoreinheit (12) erfasste Bildpunkte und/oder Bildlinien basierend auf den bewegten Partikeln (13) Bewegungsvektoren der Partikel (13) und damit des Fluids (10) erzeugt werden.

3. Strömungsmessverfahren nach Anspruch 2,
**dadurch gekennzeichnet,**
**dass** der Rechnereinheit (16) das Ausgabemodul (17) nachgeschaltet wird, an das die Bewegungsvektoren der Partikel (13) und damit des Fluids (10) von der Recheneinheit (16) ausgegeben werden und durch das basierend auf den Bewegungsvektoren der Partikel (13) eine Strömungsgeschwindigkeit des Fluids (10) als Ausgangssignal (18) ausgegeben wird.

4. Strömungsmessverfahren nach einem der Ansprüche 1 bis 3,
**dadurch gekennzeichnet,**
**dass** die Sensoreinheit (12) mittels wenigstens einem CMOS- Sensor (19) und/oder einem CCD-Sensor und/oder einer Anordnung von Photodioden (20) aufgebaut wird.

5. Strömungsmessverfahren nach einem der vorgenannten Ansprüche, **dadurch gekennzeichnet,**
**dass** einer ersten Messebene (14) eine erste Sensoreinheit (12) und einer zweiten Messebene (14) eine zweite Sensoreinheit (12) zugeordnet wird, wobei die wenigstens zwei Messebenen (14) in Strömungsrichtung (22) des Fluids hintereinander folgend ausgebildet werden.

6. Strömungsmessverfahren nach Anspruch 5,
**dadurch gekennzeichnet,**
**dass** die Beobachtungsrichtung (23) der Sensoreinheit (12) unter einem Winkelversatz entgegen der Emissionsrichtung eines Lichtes einer Lichtquelle (11) eingerichtet wird.

7. Strömungsmessverfahren nach einem der vorgenannten Ansprüche, **dadurch gekennzeichnet,**
**dass** wenigstens zwei Lichtquellen (11) so zueinander und zu der Sensoreinheit (12) angeordnet werden, dass wenigstens zwei mit einer gemeinsamen Schnittlinie oder in Strömungsrichtung hintereinander liegende Messebenen (14) geschaffen und von nur einer Sensoreinheit (12) erfasst werden.

8. Strömungsmessverfahren nach einem der vorgenannten Ansprüche, **dadurch gekennzeichnet,**
**dass** zwei Messebenen (14) ausgebildet werden, die parallel zueinander, senkrecht zueinander oder mit einem Winkelversatz von 60° bis 180° und insbesondere 90° zueinander ausgerichtet sind.

9. Strömungsmessverfahren nach einem der vorgenannten Ansprüche, **dadurch gekennzeichnet,**
**dass** die wenigstens eine Lichtquelle (11) kontinuierliches oder gepulstes Licht ausgibt und/oder dass die wenigstens eine Lichtquelle (11) Licht mit voneinander unterschiedlichen Wellenlängen ausgibt.

10. Strömungsmessvorrichtung (1) zur Ausführung eines Strömungsmessverfahrens nach einem der vorgenannten Ansprüche, wenigstens aufweisend: - einen Rohrabschnitt (24), der mit einem Fluid (10) durchströmbar ist, - zumindest eine Lichtquelle (11), mit der Licht in den Rohrabschnitt (24) einstrahlbar ist und mit der in wenigstens einer Messebene die im Fluid (10) vorhandenen Partikel (13) beleuchtbar sind, - wenigstens eine Sensoreinheit (12), mit der im Fluid (10) vorhandene Partikel (13) innerhalb einer Messebene (14) erfassbar sind, wobei die Sensoreinheit (12) ein CMOS-Array-Detektor (19) mit einem direkt verbundenen FPGA (15) aufweist, das mit einer Programmkonfiguration betreibbar ist, mit der von der Sensoreinheit (12) erfasste Bildpunkte und/oder Bildlinien basierend auf den bewegten Partikeln (13) Bewegungsvektoren der Partikel (13) und damit des Fluids (10) erzeugbar sind, und wobei die Sensoreinheit (12) wenigstens zwei oder eine Vielzahl von Einzeldetektoren (12a, 12b, 12c, 12b) aufweist, mit der Sensorsignale (S) betreffend Bildpunkte und/oder Bildlinien ausgebbar sind, - wobei der Sensoreinheit (12) und dem Feldprogrammierbaren-Gatter-Array (15) eine Recheneinheit (16) nachgeschaltet ist, mit der die Geschwindigkeitsprofile auf der Grundlage der Integration und der Gewichtung der Bildpunkte und/oder Bildlinien durch das FPGA (15) als integrale Strömungsparameter von der Recheneinheit (16) verarbeitet werden und als Ausgangsignal (18) von einem Ausgabemodul (17) ausgebbar sind.

## Claims

1. A flow measuring method for the optical measurement of time variable flow parameters of a fluid (10) flowing through a closed cross-section having at least one light source (11) and having at least one sensor unit (12) by which particles (13) present within a measurement plane (14) in the fluid (10) are detected, wherein
- at least one measurement plane and the particles (13) present therein are illuminated by the light source (11); wherein
- the particles are imaged on the sensor unit (12), and **characterized in that**
- the sensor unit (12) has a CMOS array detector (19) having a directly connected FPGA (15) and with the sensor unit (12) being provided with at least two or with a plurality of individual detectors (12a, 12b, 12c, 12b) by which sensor signals (S) relating to picture elements and/or picture lines are output; and **in that**
- the sensor signals (S) relating to picture elements and/or picture lines are converted continuously and in real time by means of the sensor unit (12) by means of spatial filtering technology into at least one speed profile while omitting buffering;
- the sensor unit (12) continuously calculates flow parameters in real time from the time dependent speed profile comprising at least two of the following parameters: volume flow, accumulated flow amount, flow profile, turbulent/laminar flow state, degree of turbulence, spectrum of turbulence, spin;
- the sensor unit (12) continuously calculates and outputs with time resolution in real time one or more integral flow state parameters;
- with the sensor unit (12) and the field programmable gate array (15) having a processing unit (16) connected downstream by which the speed profiles are processed as integral flow parameters by the processing unit (16) on the basis of the integration and weighting of the picture elements and/or picture lines by the FPGA (15) and are output by an output module (17) as an output signal (18).

2. A flow measuring method in accordance with claim 1,
**characterized in that**
a field programmable gate array (15) is introduced between the sensor unit (12) and the processing unit (16) that is operated with a program configuration by which picture elements and/or picture lines detected by the sensor unit (12) based on the moved particles (13), movement vectors of the particles (13) and thus of the fluid (10) are generated.

3. A flow measuring method in accordance with claim 2,
**characterized in that**
the processing unit (16) has an output module (17) connected downstream to which the movement vectors of the particles (13) and thus of the fluid (10) are output by the processing unit (16) and by which a flow rate of the fluid (10) is output as an output signal based on the movement vectors of the particles (13).

4. A flow measuring method in accordance with one of the claims 1 to 3,
**characterized in that**
the sensor unit (12) is set up by means of at least one CMOS sensor (19) and/or one CCD sensor and/or an arrangement of photodiodes (20).

5. A flow measuring method in accordance with one of the preceding claims,
**characterized in that**
a first sensor unit (12) is associated with a first measurement plane (14) and a second sensor unit (12) is associated with a second measurement plane (14), with the at least two measurement planes (14) being formed following after one another in the direction of flow (22) of the fluid.

6. A flow measuring method in accordance with claim 5,
**characterized in that**
the direction of observation (23) of the sensor unit (12) is set up at an angular offset against the emission direction of light of a light source (11).

7. A flow measuring method in accordance with one of the preceding claims,
**characterized in that**
at least two light sources (11) are arranged with respect to one another and to the sensor unit (12) such that at least two measurement planes (14) having a common cut line or disposed after one another in the direction of flow are provided and are detected by only one sensor unit (12).

8. A flow measuring method in accordance with one of the preceding claims,
**characterized in that**
two measurement planes (14) are formed that are aligned in parallel with one another, perpendicular to one another, or with an angular offset with respect to one another of 60° to 180°, and in particular 90°.

9. A flow measuring method in accordance with one of the preceding claims,
**characterized in that**
the at least one light source (11) outputs continuous or pulsed light; and/or **in that** the at least one light source (11) outputs light at wavelengths differing from one another.

10. A flow measuring device (1) for carrying out a flow measuring method in accordance with one of the preceding claim comprising at least:
- a tube section (24) that can be flowed through by fluid (10);
- at least one light source (11) by which light can be irradiated into the tube section (24) and by which the particles (13) present in the fluid (10) can be illuminated in at least one measurement plane;
- at least one sensor unit (12) by which particles present in the fluid (10) are detectable within a measurement plane (14), with the sensor unit (12) having a CMOS array detector (10) having a directly connected FPGA (15) that is operable with a program configuration by which picture elements and/or picture lines detected by the sensor unit (12) based on the moved particles (13), movement vectors of the particles (13) and thus of the fluid (10) can be generated, and with the sensor unit (12) having at least two or a plurality of individual detectors (12a, 12b, 12c, 12b) by which sensor signals relating to picture elements and/or picture lines can be output; the sensor unit (12) and the field programmable gate array (15) having a processing unit (16) connected downstream by which the speed profiles are processed as integral flow parameters by the processing unit (16) on the basis of the integration and the weighting of the picture elements and/or picture lines by the FPGA (15) and can be output as an output signal (18) by an output module (17).

## Revendications

1. Procédé de mesure de débit destiné à la mesure optique de paramètres d'écoulement variables dans le temps d'un fluide (10) s'écoulant à travers une section transversale fermée, au moyen d'au moins une source de lumière (11) et d'au moins un ensemble capteur (12) permettant de détecter des particules (13) présentes dans le fluide (10) dans un plan de mesure (14), dans lequel
- au moins un plan de mesure et les particules (13) présentes dans celui-ci sont éclairés au moyen de la source de lumière (11), dans lequel
- les particules sont représentées sur l'ensemble capteur (12) et **caractérisé en ce que**
- l'ensemble capteur (12) présente un détecteur CMOS à matrice (19) doté d'un FPGA (15) directement raccordé et l'ensemble capteur (12) étant pourvu d'au moins deux ou d'une pluralité de détecteurs individuels (12a, 12b, 12c, 12b) au moyen desquels des signaux de capteur (S) concernant des points d'image et/ou lignes d'image sont fournis en sortie, et **en ce que**
- les signaux de capteur (S) concernant des points d'image et/ou lignes d'image sont convertis en continu et en temps réel, sans mémorisation temporaire, par technologie de filtrage spatial en au moins un profil de vitesse au moyen de l'ensemble capteur (12),
- l'ensemble capteur (12) fournit en sortie, en continu et en temps réel, à partir du profil de vitesse dépendant du temps, des paramètres d'écoulement, comprenant au moins deux des paramètres suivants : débit volumétrique, débit massique cumulé, profil d'écoulement, état d'écoulement turbulent/laminaire, degré de turbulence, spectre de turbulence, écoulement giratoire,
- l'ensemble capteur (12) calcule et fournit en sortie, en continu, en temps réel et avec résolution temporelle, un ou plusieurs paramètres d'état d'écoulement intégraux,
- dans lequel un ensemble de calcul (16) est placé en aval de l'ensemble capteur (12) et du réseau de portes programmable par l'utilisateur (15), ledit ensemble de calcul permettant de traiter les profils de vitesse sur la base de l'intégration et de la pondération des points d'image et/ou lignes d'image par le FPGA (15) comme paramètres d'écoulement intégraux par l'ensemble de calcul (16) et de les émettre sous la forme d'un signal de sortie (18) à partir d'un module de sortie (17).

2. Procédé de mesure de débit selon la revendication 1,
**caractérisé en ce que**
un réseau de portes programmable par l'utilisateur (15) est placé entre l'ensemble capteur (12) et l'ensemble de calcul (16), ledit réseau de portes programmable par l'utilisateur étant exploité avec une configuration de programme au moyen de laquelle, à partir des points d'image et/ou lignes d'image détectés par l'ensemble capteur (12), des vecteurs de mouvement des particules (13) et ainsi du fluide (10) sont générées sur la base des particules (13) déplacées.

3. Procédé de mesure de débit selon la revendication 2,
**caractérisé en ce que**
le module de sortie (17) est placé en aval de l'ensemble de calcul (16), les vecteurs de mouvement des particules (13) et ainsi du fluide (10) étant fournis en sortie par l'ensemble de calcul (16) sur ledit module de sortie et une vitesse d'écoulement du fluide (10) étant fournie en sortie comme signal de sortie (18) sur la base des vecteurs de mouvement des particules (13) au moyen dudit module de sortie.

4. Procédé de mesure de débit selon l'une des revendications 1 à 3, **caractérisé en ce que**
l'ensemble capteur (12) est conçu au moyen d'au moins un capteur CMOS (19) et/ou un capteur CCD et/ou un agencement de photodiodes (20).

5. Procédé de mesure de débit selon l'une des revendications précédentes, **caractérisé en ce que**
un premier ensemble capteur (12) est associé à un premier plan de mesure (14) et un second ensemble capteur (12) à un second plan de mesure (14), les au moins deux plans de mesure (14) étant réalisés l'un derrière l'autre dans le sens d'écoulement (22) du fluide.

6. Procédé de mesure de débit selon la revendication 5,
**caractérisé en ce que**
le sens d'observation (23) de l'ensemble capteur (12) est configuré avec un décalage angulaire dans le sens opposé à la direction d'émission d'une lumière d'une source de lumière (11).

7. Procédé de mesure de débit selon l'une des revendications précédentes, **caractérisé en ce que**
au moins deux sources de lumière (11) sont agencées de telle manière l'une par rapport à l'autre et par rapport à l'ensemble capteur (12) qu'au moins deux plans de mesure (14) avec une ligne d'intersection commune ou situés l'un derrière l'autre dans le sens d'écoulement sont créés et détectés par un seul ensemble capteur (12).

8. Procédé de mesure de débit selon l'une des revendications précédentes, **caractérisé en ce que**
deux plans de mesure (14) sont formés, lesquels sont orientés parallèlement l'un à l'autre, perpendiculairement l'un à l'autre ou avec un décalage angulaire compris entre 60° et 180° et en particulier de 90° l'un par rapport à l'autre.

9. Procédé de mesure de débit selon l'une des revendications précédentes, **caractérisé en ce que**
l'au moins une source de lumière (11) émet de la lumière continue ou pulsée et/ou **en ce que** l'au moins une source de lumière (11) émet de la lumière avec des longueurs d'onde différentes les unes des autres.

10. Dispositif de mesure de débit (1) destiné à exécuter un procédé de mesure de débit selon l'une des revendications précédentes, comportant au moins : - une partie de tuyau (24) dans laquelle un fluide (10) peut circuler, - au moins une source de lumière (11) au moyen de laquelle de la lumière peut être irradiée dans la partie de tuyau (24) et au moyen de laquelle les particules (13) présentes dans le fluide (10) peuvent être éclairées dans au moins un plan de mesure, - au moins un ensemble capteur (12) au moyen duquel des particules (13) présentes dans le fluide (10) dans un plan de mesure (14) peuvent être détectées, l'ensemble capteur (12) présentant un détecteur CMOS à matrice (19) doté d'un FPGA (15) directement raccordé qui peut être exploité avec une configuration de programme au moyen de laquelle, à partir de points d'image et/ou lignes d'image détectés par l'ensemble capteur (12), des vecteurs de mouvement des particules (13) et ainsi du fluide (10) peuvent être générés sur la base des particules (13) déplacées, et l'ensemble capteur (12) présentant au moins deux ou une pluralité de détecteurs individuels (12a, 12b, 12c, 12b), au moyen desquels des signaux de capteur (S) concernant des points d'image et/ou lignes d'image peuvent être fournis en sortie, - un ensemble de calcul (16) étant placé en aval de l'ensemble capteur (12) et du réseau de portes programmable par l'utilisateur (15), ledit ensemble de calcul (16) permettant de traiter les profils de vitesse sur la base de l'intégration et de la pondération des points d'image et/ou lignes d'image par le FPGA (15) sous la forme de paramètres d'écoulement intégraux et de les fournir en sortie sous la forme d'un signal de sortie (18) par un module de sortie (17
